Europäisches Patentamt

European Patent Office

Office européen des brevets

(19)

(11) Numéro de publication: **0 280 751**
**B1**

# FASCICULE DE BREVET EUROPEEN

(12)

(45) Date de publication du fascicule du brevet:
06.06.90

(51) Int. Cl.⁵: **B60K 28/00**

(21) Numéro de dépôt: **87102998.9**

(22) Date de dépôt: **03.03.87**

(54) **Coupe-batterie à commande électronique.**

(43) Date de publication de la demande:
**07.09.88 Bulletin 88/36**

(45) Mention de la délivrance du brevet:
**06.06.90 Bulletin 90/23**

(84) Etats contractants désignés:
**AT BE CH DE ES GB IT LI NL SE**

(56) Documents cités:
**EP-A- 0 011 969**
**DE-A- 2 907 720**
**FR-A- 2 591 972**

(73) Titulaire: **ETUDES ET COMMERCIALISATION D'APPAREILS NOUVEAUX SPECIAUX, ECANS, 2bis Route de Cosne, F-03630 Désertines(FR)**

(72) Inventeur: **Pointout, Jacques, 10, Place E. Piquand, F-03100 Montluçon(FR)**
Inventeur: **Pointout, Philippe, 10, Place E. Piquand, F-03100 Montluçon(FR)**

(74) Mandataire: **Casalonga, Axel et al, BUREAU D.A. CASALONGA - JOSSE Morassistrasse 8, D-8000 München 5(DE)**

ACTORUM AG

## Description

L'invention concerne les interrupteurs de batterie à bord des véhicules automobiles, et plus particulièrement dans le cas de camions affectés au transport de matières dangereuses.

L'état de la technique en ce domaine est particulièrement illustré par le brevet français 2 562 322 au nom de la demanderesse et correspondant au préambule de la revendication 1 de la présente demande. Dans ce dispositif antérieur, un contacteur électromagnétique a bobines d'appel et de maintien est monté sous un capot étanche avec l'électronique permettant une commande à distance à l'aide de lignes électriques véhiculant une intensité très faible. L'armature mobile du dispositif électromagnétique porte, en plus des pièces de contact principales mono- ou multipolaires du circuit de batterie, un contact auxiliaire à action retardée assurant lors de l'ouverture du circuit principal et selon les cas le précontact à la masse de l'excitation de l'alternateur dans le cas d'alternateur à régulateur incorporé, ou la précoupure de l'excitation dans le cas d'alternateur à régulateur extérieur. Toutefois, ce retard obtenu mécaniquement est imprécis et difficilement ajustable, ce qui peut être préjudiciable aux diodes d'excitation de l'alternateur. En outre, le contact auxiliaire de précontact ou de précoupure, qui est normalement établi pour couper une intensité réduite, risque d'être détruit par arc électrique dans le cas où l'utilisateur, après avoir fermé le contact de commande, l'ouvre et le referme dans un temps court, par exemple par suite de difficultés de démarrage. Un autre défaut de fonctionnement peut provenir du fait qu'une chute de tension momentanément importante à la batterie provoque le déclenchement intempestif du contacteur électromagnétique, empêchant ainsi le fonctionnement du véhicule.

Le but de l'invention est d'apporter au dispositif précédent, ou aux coupe-batteries similaires, un certain nombre de perfectionnements en vue d'éliminer en particulier les inconvénients qui précèdent.

Un premier perfectionnement a pour but d'empêcher positivement tout réenclenchement pendant un certain délai après un déclenchement, ce délai étant déterminé pour que l'intensité du courant d'excitation soit revenue à une valeur non dangereuse.

Un deuxième perfectionnement a pour but d'assurer non seulement un courant faible dans la ou les lignes de commande à distance, mais une absence de courant permanent dans ces lignes.

Un troisième perfectionnement a pour but d'assurer un ajustage précis du délai séparant l'action du contact auxiliaire et celui du ou des contacts principaux.

Un quatrième perfectionnement a pour but d'assurer une protection du dispositif contre tout déclenchement intempestif, même en cas de chute de tension importante à la batterie.

Un cinquième perfectionnement a pour but d'éviter une consomation permanente de courant par les bobines du contacteur électromagnétique principal.

Le premier perfectionnement consiste conformément à la partie caractérisante de la revendication 1, à rajouter un circuit de temporisation entre une sortie de commande de la commande électronique et un point plus en amont dans cette commande, pour assurer, après un premier déclenchement, l'inhibition de toute action ultérieure de réenclenchement pendant le temps défini par cette temporisation.

Le deuxième perfectionnement consiste à utiliser deux boutons à action fugitive sur le tableau de bord, associés à deux lignes de commande, en remplaçant le dernier transistor précédant la sortie de commande par un thyristor ou dispositif équivalent dont les deux lignes de commande indiquées assurent respectivement l'allumage et l'extinction.

Le troisième perfectionnement consiste à remplacer le contact auxiliaire à commande mécanique par un relais indépendant, séparé ou incorporé à l'appareil, et commandé électroniquement.

Le quatrième perfectionnement consiste à commander le transistor de commande du bobinage d'appel par un autre transistor, lui-même commandé par le courant de charge d'un condensateur à partir de la sortie de commande, et à commander le transistor de commande du bobinage de maintien directement à partir de cette sortie de commande.

Enfin, le cinquième perfectionnement consiste à supprimer le bobinage de maintien du contacteur électromagnétique et à disposer à la place un verrou électromagnétique qui, dans sa position de repos, verrouille l'armature du dispositif électromagnétique dans sa position de travail, où elle reste même en l'absence de courant dans le bobinage d'appel, le montage électronique étant modifié en conséquence.

D'autres particularités de l'invention vont apparaître dans la description qui va suivre de divers modes de réalisation pris comme exemples et représentés sur le dessin annexé, sur lequel :

la figure 1 représente le schéma d'un premier mode de réalisation avec ligne de commande unique;

la figure 2 représente le schéma d'un second mode de réalisation avec double ligne de comande;

la figure 3 représente le schéma d'un troisième mode de réalisation, et

la figure 4 est une coupe axiale du dispositif électromagnétique correspondant à ce troisième mode de réalisation.

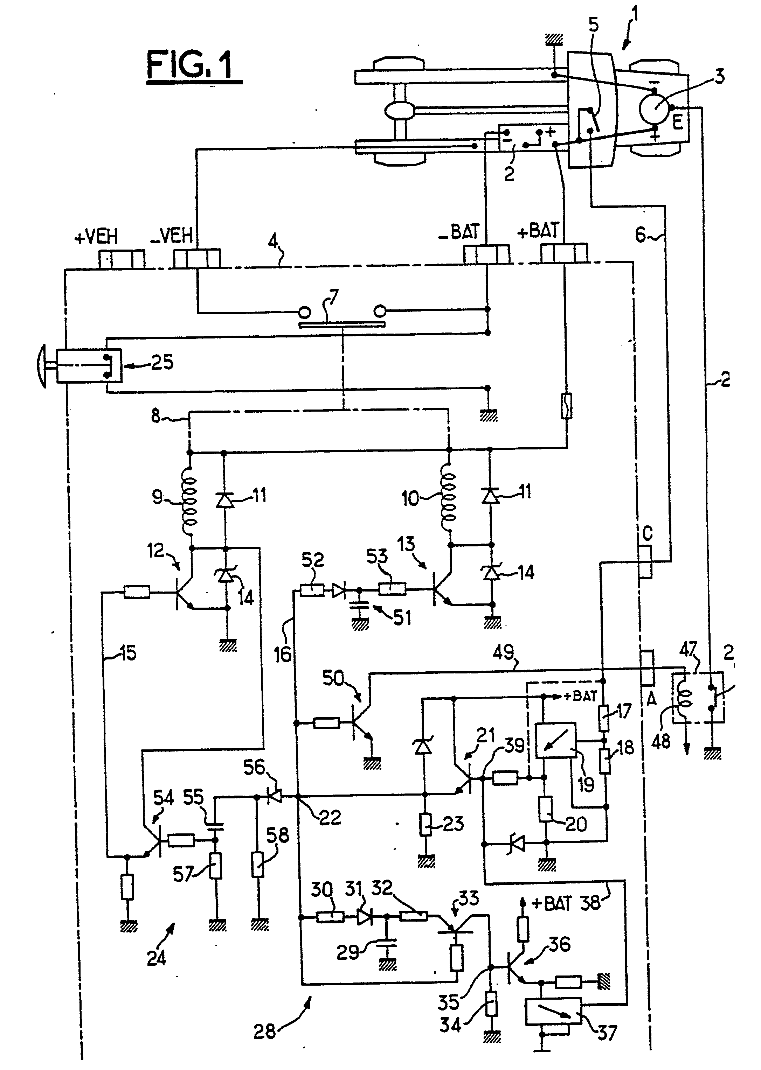

Sur la figure 1, on a représenté schématiquement la véhicule 1, avec sa batterie 2 et son alternateur 3. Le coupe-batterie 4, naturellement à bord du véhicule lui aussi, comporte quatre bornes + VEH, - VEH, - BAT, + BAT, qui peuvent être reliées respectivement aux bornes + et - du véhicule et aux bornes - et + de la batterie, certaines de ces bornes pouvant être omises ou non raccordées selon le schéma de l'installation électrique adopté par le constructeur du véhicule. Ce coupe-batterie est commandé à distance à partir du contact principal 5 du tableau de bord par l'intermédiaire d'une ligne de commande à distance 6, raccordée à une borne d'entrée C de l'interrupteur de batterie 4.

Comme pour le coupe-batterie antérieur rappelé plus haut, il est prévu une ou deux barrettes 7 de contact principal, selon que le coupe-batterie est mono- ou bipolaire, une seule de ces barrettes étant présentée sur la figure 1 dans un but de simplification. Cette ou ces barrettes sont commandées mécaniquement, comme schématisé en 8, par un dispositif électromagnétique comportant un double bobinage : un bobinage d'appel 9 et un bobinage de maintien 10. Chacun d'eux comporte d'une manière habituelle une diode 11 de dérivation des extracourants d'ouverture, et un transistor de commande, respectivement 12 pour la bobine 9 et 13 pour la bobine 10, qui referment à la masse le circuit alimenté à partir du + BAT, ces transistors comportant eux-mêmes en dérivation une diode Zener de protection 14. On a désigné par 15 la ligne d'appel, c'est-à-dire la ligne qui, lorsqu'elle est polarisée positivement, rend le transistor 12 passant et alimente la bobine d'appel 9, et par 16 la ligne de maintien qui commande pareillement l'alimentation de la bobine de maintien 10.

Par ailleurs, depuis l'entrée de commande C, reliée à la ligne de commande à distance 6, le circuit se referme à la masse par deux résistances 17,18 dont les points de jonction sont raccordés à l'entrée de l'optocoupleur 19, les sorties de cet optocoupleur reliant la source + BAT à une résistance de polarisation 20 qui commande la base d'un transistor de sortie 21, pourvu lui aussi d'une diode Zener de protection et qui polarise, lorsque la commande 6 est active, une sortie de commande 22 avec résistance 23 de dépolarisation, laquelle à son tour commande, par l'intermédiaire d'un monostable 24, la polarisation de la ligne d'appel 15 pendant un temps déterminé, tandis que la ligne de maintien 16 est alimentée de façon durable, par exemple dans le cas présent, directement à partir de la sortie de commande 22. On a représenté également en 25 l'interrupteur local d'arrêt d'urgence qui ouvre la mise à la masse du circuit du coupe-batterie 4 et désactive par conséquent le coupe-batterie.

Par ailleurs, on rappelle que l'alternateur 3 comporte, en plus de ses bornes + et - du circuit principal, une borne d'excitation E qui, selon le type d'alternateur, doit être soit reliée à la masse un certain délai avant l'ouverture de la barrette 7, pour les alternateurs à régulateur incorporé dits à précontact ou D+, soit être coupée de la masse à un certain délai avant l'ouverture de la barrette 7 pour les alternateurs à régulateur extérieur dits à précoupure d'excitation. Cette fonction est assurée par un contact auxiliaire 26 relié à la borne d'excitation E par une ligne 27 et qui doit donc être actionné, selon le type d'alternateur, à la fermeture ou à l'ouverture avant l'ouverture du contact principal 7.

Comme exposé plus haut, lorsqu'on ouvre le contact de commande 5 au tableau de bord, on établit, dans le cas des alternateurs à précontact, la fermeture du contact auxiliaire 26 destiné à protéger les diodes d'excitation, et le circuit est alors le siège d'un courant transitoire élevé qui dépasse de beaucoup le pouvoir de coupure du contact auxiliaire 26. De ce fait, si le conducteur referme le contact 5 un temps très court après son ouverture, en particulier un temps insuffisant pour que le courant transitoire soit redescendu à une valeur non dangereuse, il peut se produire une destruction par arc électrique du contact auxiliaire 26. Ce phénomène risque en particulier de se produire en cas de difficultés de démarrage.

Pour éviter cela, on munit le dispositif 4, conformément à l'invention, d'un circuit de temporisation 28 qui, pour toute transition négative de la sortie de commande 22, produit sur la base de commande du transistor de sortie de commande à distance 21, une tension de blocage de ce transistor pendant un temps déterminé par cette temporisation.

Dans l'exemple représenté sur la figure 1, ce circuit de temporisation 28 comprend un condensateur 29, chargé à partir de la sortie de commande 22 par l'intermédiaire d'une résistance 30 et d'une diode 31, et déchargé à la masse par l'intermédiaire d'une résistance 32, d'un transistor 33 et d'une autre résistance 34, ce transistor 33 étant lui-même commandé directement à partir de la sortie de commande 22. Le point 35 de raccordement entre le transistor 33 et la résistance 34 commande à son tour un transistor 36, lequel commande l'entrée d'un optocoupleur 37 dont la sortie produit la mise à la masse d'une ligne d'inhibition 38 raccordée en 39 à la base de commande du transistor 21 de sortie de la commande à distance.

Au repos, c'est-à-dire lorsque le condensateur 29 est déchargé, le transistor 36 est bloqué, de sorte que la ligne d'inhibition 38 n'est pas réunie à la masse. Cela permet donc, lorsqu'on ferme pour la première fois le contact de commande 5, de produire par la commande à distance 6 et 17 à 23, la mise au niveau haut de la sortie de commande 22, ce qui produit par conséquent la charge du condensateur 29 par 30 et 31. Lors d'une première ouverture du contact 5, la transmission à distance met la sortie de commande 22 au potentiel zéro, ce qui rend le transistor 33 passant et produit donc la mise à la masse de la ligne d'inhibition 38 pendant le temps nécessaire à la décharge du condensateur 29 à travers 32, 33 et 34. Pendant tout ce temps, le point 39 est donc maintenu au potentiel zéro, même si l'utilisateur referme immédiatement le contact 5. Ce n'est donc qu'après le délai nécessaire pour le retour à la normale du courant d'excitation que la commande à distance pourra agir à nouveau, protégeant ainsi le contact auxiliaire 26.

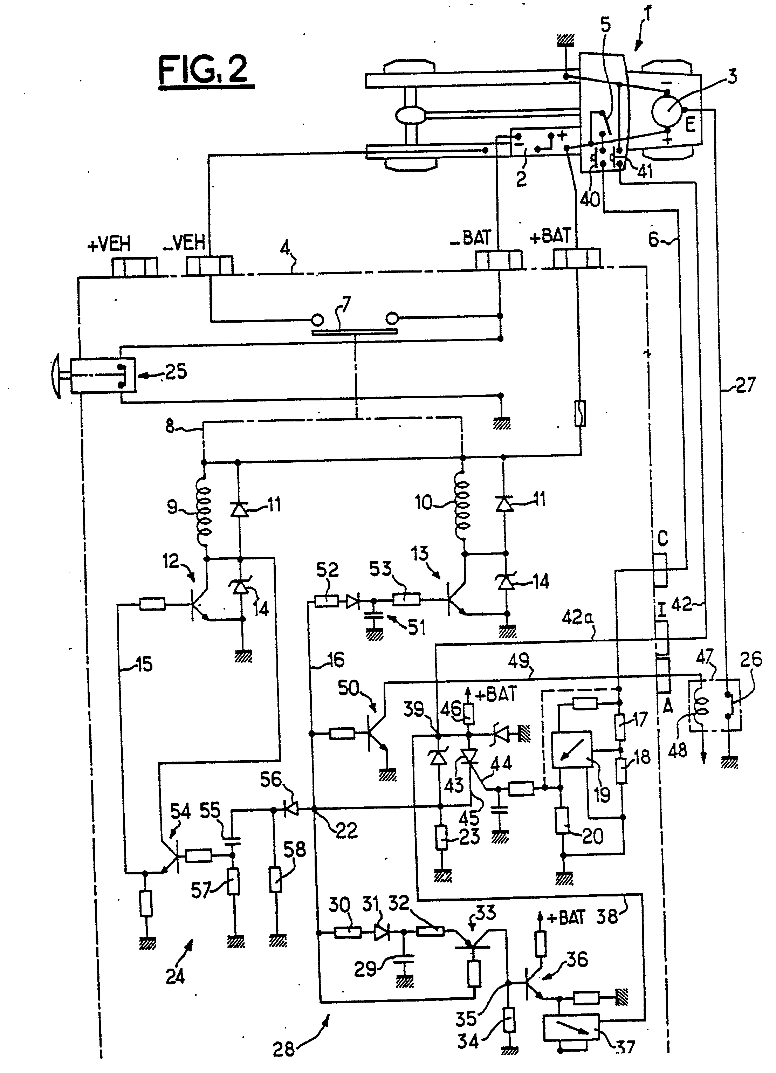

On sait que, lorsque le véhicule 1 est utilisé pour le transport de matières dangereuses, les normes de sécurité imposent que la ligne de commande à distance 6 ne soit parcourue que par une intensité de courant inférieure à 20 mA. La commande à distance électronique indiquée permet d'abaisser cette intensité à une valeur bien inférieure à ce qu'imposent les normes. Il est cependant possible, conformément à l'invention, d'aller encore plus loin en faisant en sorte qu'aucun courant permanent ne circule dans la ligne de commande. Pour cela, on peut utiliser la variante de réalisation représentée sur la figure 2, dans laquelle on a inséré, entre le contact de bord 5 et la ligne de commande à distance 6, un bouton-poussoir 40 à action fugitive destiné à assurer la mise en service de la batterie, tandis qu'un autre bouton-poussoir 41 également à action fugitive et destiné à assurer l'interruption de la batterie est raccordé par une ligne supplémentaire d'interruption 42 à une borne supplémentaire d'interrup-

tion I que comporte le coupe-batterie 4.

Tout ce qui a été décrit précédemment à propos du premier mode de réalisation reste valable, excepté que le transistor de sortie 21 de la commande à distance est remplacé par un thyristor 43 dont la gâchette 44 est commandée par l'optocoupleur 19 et dont le drain 45 conduit à la sortie de commande 22. En outre, dans ce cas, le point d'aboutissement 39 de la ligne d'inhibition 38 correspond au côté source du thyristor 43, lequel point est normalemnt polarisé par une résistance 46 et constitue également le point d'aboutissement de la ligne d'interruption 42.

De la sorte, lorsqu'on ferme le contact 5, aucun courant ne passe dans la ligne de commande 6 tant qu'on n'a pas appuyé sur le bouton de mise en marche 40. Celui-ci produit alors par 44 l'allumage du thyristor 43, et tout fonctionne comme décrit précédemment, même après que l'on ait relâché le bouton 40, excepté qu'à partir de ce moment plus aucun courant ne circule dans la ligne 6. Inversement, pour couper la batterie, l'utilisateur doit appuyer sur le bouton 41, ce qui met momentanément à la masse le point 39, donc éteint le thyristor 43, lequel demeure naturellement éteint après relâchement de ce bouton malgré la polarisation 46. La ligne d'inhibition 38 agit comme dans l'exemple précédent en maintenant le point 39 à la masse pendant le délai voulu pour empêcher tout réallumage du thyristor.

Dans le premier exemple de réalisation, tout comme dans le second exemple, si le véhicule n'est pas destiné au transport de matières dangereuses, une partie de l'électronique de la commande à distance peut être supprimée et remplacée par un shunt représenté en traits interrompus sur les figures 1 et 2, tout comme dans le mode de réalisation décrit dans le brevet antérieur précité.

On a vu plus haut l'intérêt qu'il y a à pouvoir ajuster, et d'une manière assez précise, le délai que sépare la fermeture ou l'ouverture du contact auxiliaire 26, et l'ouverture du circuit principal 7, afin d'éviter des dispersions de fabrication dues aux tolérances, et de s'adapter aux divers types d'alternateurs utilisés. Pour celà, comme exposé plus haut, l'invention prévoit de remplacer le contact auxiliaire 26 à commande mécanique actionné par les bobinages 9 et 10, par un relais électromagnétique indépendant 47 qui comporte son propre bobinage 48. Ce relais 47 peut être séparé du coupe-batterie 4, pour être placé par exemple à proximité de l'alternateur 3 et relié par une borne A, ou encore être incorporé au coupe-batterie 4. Dans le cas le plus fréquent d'alternateur à précontact, le relais 47 est du type normalement fermé, comme illustré sur les figures 1 à 3, et s'ouvre lorsque le bobinage 48 est excité. Inversement, dans le cas d'alternateur à précoupure, le relais 47 est du type normalement ouvert et se fermant par excitation du bobinage.

La commande électronique de ce relais 47 est assurée par une ligne 49 à partir d'un transistor 50 dont la base est commandée directement à partir de la sortie de commande 22. En outre, un condensateur 51 est inséré en dérivation entre les résistances 52 et 53 de polarisation de la ligne de maintien 16. De cette manière, dans l'un et l'autre modes de réalisation des figures 1 et 2, lorsque la sortie de commande 22 passe au potentiel zéro sur demande d'interruption, le transistor 50 bascule immédiatement et produit instantanément la coupure de l'excitation 48 du contact auxiliaire 26, alors que la bobine de maintien 10 continue à être parcourue par un courant pendant le temps nécessaire à la décharge du condensateur 51, lequel s'est naturellement trouvé chargé lors de la précédente fermeture du circuit principal. On obtient donc un retard relativement précis et facilement ajustable par le choix des valeurs des composants.

On a vu plus haut l'intérêt qu'il y a de faire en sorte que le coupe-batterie puisse enclencher et rester enclenché même si la tension d'alimentation chute de manière importante et brutalement. Pour cela, le transistor d'appel 12 est commandé par la ligne d'appel 15 à partir d'un autre transistor 54, lui-même commandé par le courant de charge d'un condensateur 55 à partir de la sortie de commande 22 et par l'intermédiaire d'une diode 56. Le courant de charge polarise une résistance de charge 57, tandis qu'une résistance de décharge 58 assure la décharge lorsque la sortie de commande 22 est à zéro.

De la sorte, lorsque la sortie de commande 22 passe au niveau haut, pendant tout le temps que dure la charge du condensateur 55, le transistor 54 se trouve passent et produit donc la commande du transistor 12, donc l'alimentation de la bobine d'appel 9. Cette alimentation cesse lorsque le condensateur 55 est suffisamment chargé, et alors seule reste alimentée la bobine de maintien 10 par le transistor 13 commandé à partir de la sortie de commande 22 comme exposé.

Il résulte de tout ce qui précède que lorsque le véhicule est à l'arrêt, contact coupé et coupe-batterie coupé, aucun des trois bobinages 9, 10 et 48 n'est parcouru par aucun courant. Au contraire, tant que le véhicule est en fonctionnement et que le circuit de batterie est établi, les bobines 10 et 48 sont alimentées en permanence. Ceci constitue un inconvénient, en particulier dans le mode de réalisation de la figure 2 où le conducteur peut oublier d'appuyer sur le contact d'interruption 41 et produire ainsi une décharge de sa batterie.

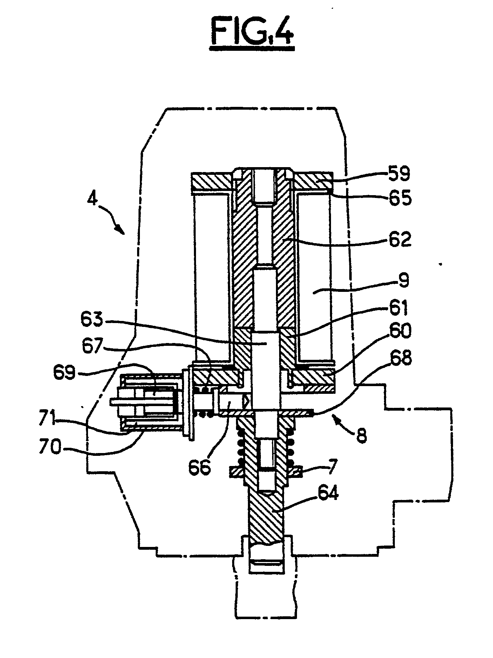

Conformément à l'invention, on peut éviter cette consommation permanente du bobinage de maintien 10 en modifiant le dispositif électromagnétique de commande de la barette 7 ou des barrettes de contact du circuit principal de la manière représentée sur la figure 4.

On voit sur cette figure le circuit magnétique principal statique 59, 60, 61, avec son noyau plongeur 62, solidaire de la tige coulissante 63 qui entraîne, par l'intermédiaire de la pièce 64, la barrette de contact 7, ou une pièce qui l'entraîne à son tour. On voit en 65 la bobine isolante sur laquelle est normalement bobiné l'ensemble du bobinage d'appel 9 et du bobinage de maintien 10. Dans le cas présent, ce bobinage 10 de maintien est supprimé et la bobine 65 ne comporte par conséquent que le bobinage 9, assurant l'appel du noyau plongeur 62 de haut en bas de la figure 4 jusqu'à la position représentée sur cette figure.

Pour maintenir l'équipage mobile 62-63-64 dans cette position d'appel sans nécessiter de consommation de courant, on utilise selon l'invention un vérou électromagnétique constitué par une tige de verrouillage 66 poussée par un ressort 67 en direction de la tige 63 pour agir sur une rondelle 68 fixée entre 63 et 64. Cette tige de verrouillage 66 à son tour est solidaire de l'équipage mobile 69 d'un autre électro-aimant 70 muni d'un bobinage de rappel 71.

Lorsqu'on excite le bobinage 71, la tige 66 se rétracte et laisse l'équipage mobile remonter vers la position supérieure de la figure 4 sous l'effet de son ressort de rappel non représenté. L'extrémité de la tige 66 vient alors appuyer sur le périphérie de la rondelle 68 et l'équipage mobile principal reste donc dans sa position normale de repos en position supérieure, même lorsqu'on interrompt l'alimentation du bobinage de rappel 71. Inversement, lorsqu'on excite le bobinage d'appel 9, l'équipage mobile principal, comme on l'a vu, descend et déverrouille la tige 66 qui prend la position de verrouillage représentée sur la figure 4 sous l'effet de son ressort de rappel 67. L'équipage mobile principal reste donc dans sa position de travail, même une fois coupée l'alimentation du bobinage d'appel 9. Au lieu de commander les bobinages 9 et 10, on a donc à la place à commander les bobinages 9 et 71, mais tous les deux à l'aide d'actions de courte durée, évitant ainsi toute consommation permanente de courant.

La commande de la bobine de rappel 71 peut se faire dans le cas général à l'aide d'un dispositif de détection de transitions combiné avec un retardement d'action suivi d'une temporisation de maintien.

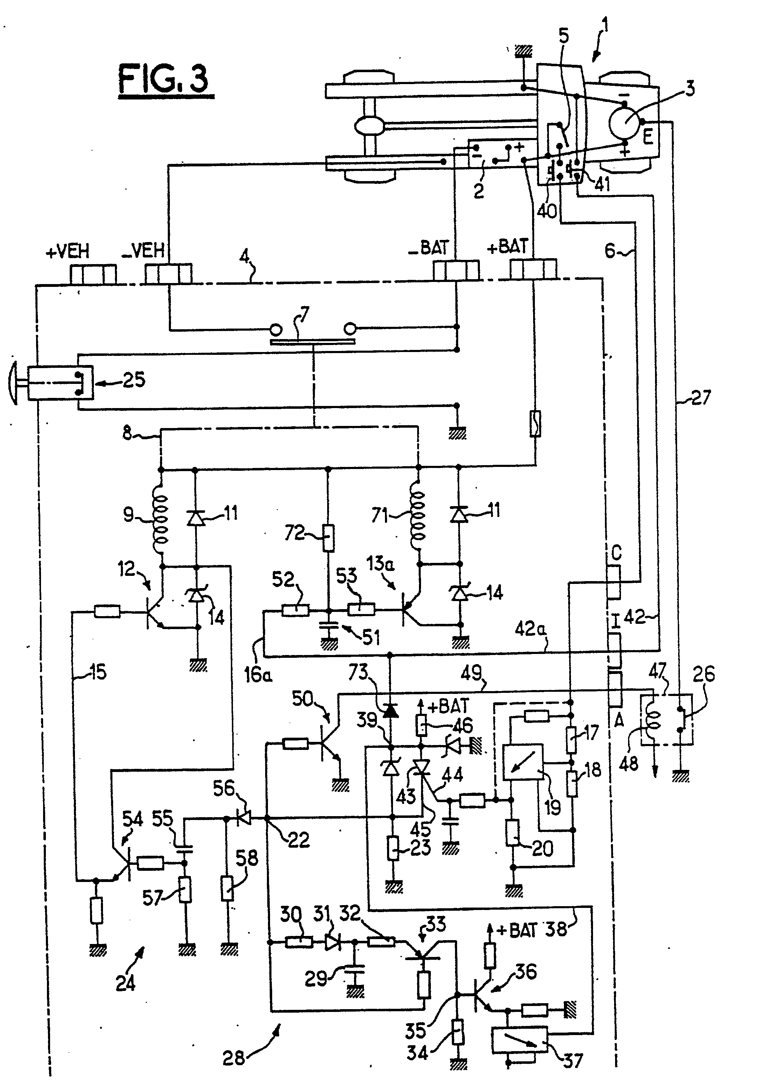

Cette réalisation s'avère particulièrement simple dans le cas où l'on utilise les deux boutons de commande fugitive 40 et 41 au tableau de bord selon le second exemple de réalisation. On voit sur la figure 3 l'adaptation du schéma nécessaire pour résoudre ce problème de commande du bobinage de rappel 71. Celui-ci est disposé à la place du bobinage de maintien 10 des figures 1 et 2, mais le transistor 13 de type NPN avec émetteur côté masse est remplacé par un transistor 13a de type PNP avec émetteur côté source. La ligne de maintien 16 devient dans ce cas une ligne de rappel 16a qui, lorsqu'elle est polarisée, produit le blocage du transistor 13a, et le rend passant lorsqu'elle est à la masse. Cette ligne de rappel 13a est alors connectée, non plus à la sortie de commande 22, mais à la ligne intérieure 42a qui fait suite à la ligne d'interruption 42 à partir de la borne d'interruption I. En outre, le point commun entre les résistances 52 et 53 est polarisé par une résistance supplémentaire 72, et une diode 73 est de préférence interposée dans l'autre branche de 42a qui aboutit au point 39 pour isoler les deux parties du circuit.

Au repos 16a est donc polarisé et 13a bloqué, de sorte qu'aucun courant ne traverse la bobine de rappel 71. Lorsqu'on presse le bouton 40, après avoir fermé le contact 5, on produit exactement de la même manière que précédemment le fonctionnement momentané du bobinage d'appel 9, sans exercer aucune action sur le bobinage de rappel 71. Cela suffit pour verrouiller mécaniquement, grâce au dispositif de la figure 4, l'équipage mobile principal dans sa position de travail.

Lorsqu'inversement, on presse le bouton d'interruption 41, cela met en route de la même manière que précédemment le dispositif d'antiréenclenchement 28, la commande par 50 du contact auxiliaire 26, et en même temps la mise à la masse de 16a. Le condensateur 51 qui est alors chargé se décharge à travers 52 et produit donc la temporisation voulue entre le précontact ou la précoupure par 26 et l'ouverture du circuit principal 7. Ce n'est que lorsque le condensateur 51 est suffisamment déchargé à la masse que le transistor 13a devient passant, actionnant ainsi le bobinage de rappel 71. Lorsqu'enfin on relâche le bouton 41, le condensateur 51 se recharge à nouveau par 72 et interrompt à nouveau l'alimentation du bobinage de rappel 71. On voit donc que dans ce cas le dernier perfectionnement indiqué ne nécessite qu'une infime modification du schéma pour passer de la figure 2 à la figure 3.

**Revendications**

1. Coupe-batterie pour véhicule, du type comportant un contact principal (7) mono- ou multipolaire sur le circuit principal de batterie actionné par un dispositif électromagnétique à deux bobinages (9, 10, 9, 71) avec une commande électronique à distance (5, 6) et un contact auxiliaire (26) assurant le précontact à la masse ou la coupure d'un circuit (27) d'excitation de l'alternateur (3) dont est muni le véhicule un certain délai avant l'ouverture du circuit principal (7), ladite commande électronique comportant un organe de sortie (21,43) établissant le niveau de tension d'une sortie de commande (22) qui agit, par un dispositif convenable sur des transistors de commande (12,13 ; 12,13a) desdits deux bobinages, caractérisé par le fait qu'il comporte un circuit (28) de temporisation entre ladite sortie de commande (22) et une entrée (39) de l'organe (21, 43) de sortie de la commande électronique propre à assurer le blocage de ce dernier organe, ladite temporisation détectant les transitions négatives de la sortie de commande (22) correspondant à l'ordre d'ouverture du circuit principal (7) pour établir pendant un temps déterminé, la polarisation de blocage sur ladite entrée (39) de l'organe de sortie (21,43), de manière à inhiber pendant ladite temporisation tout ordre de fermeture du circuit principal (7) survenant pendant ledit temps déterminé après un ordre d'ouverture dudit circuit principal.

2. Coupe-batterie selon la revendication 1, caractérisé par le fait que ledit circuit de temporisation (28) comprend un condensateur (29) chargé, par l'intermédiaire d'une résistance (30) et d'une diode (31), depuis ladite sortie de commande (22) et déchargé par l'intermédiaire d'un transistor (33) et de résistances (32,34), ledit transistor étant commandé directement par ladite sortie de commande et commandant à son tour, par un deuxième transistor (36) et un optocoupleur (37), une ligne d'inhibition (38) aboutissant à ladite entrée (39) de l'organe de sortie (21,43).

3. Coupe-batterie selon une des revendications précédentes, caractérisé par le fait que ladite commande à distance part du contact principal (5) au tableau de bord et comprend une ligne de commande (6) actionnant, par l'intermédiaire d'un optocoupleur (19) une entrée de commande de l'organe de sortie (21), lequel est constitué par un transistor ou équivalent.

4. Coupe-batterie selon une des revendications 1 et 2, caractérisé par le fait que ladite commande à distance comprend un bouton de commande (40) à action fugitive raccordé en série avec ledit contact principal (5) et un bouton d'interruption (41) également à action fugitive raccordé sur la masse, ces deux boutons commandant par l'intermédiaire de deux lignes de transmission séparées (6,42) un dispositif électronique bistable (17 à 20 ; 43 à 45), commandant lui-même ladite sortie de commande (22).

5. Coupe-batterie selon la revendication (4), caractérisé par le fait que ledit dispositif électronique bistable comprend un thyristor (43) ou similaire dont la gâchette (44) est commandée à partir de la ligne de commande (6) et dont la source (39) est commandée par la ligne d'interruption (42), le drain (45) de ce thyristor polarisant la sortie de commande (22).

6. Coupe-batterie selon une des revendications précédentes, caractérisé par le fait que ledit contact auxiliaire (26) est commandé par un relais indépendant (47), séparé ou incorporé au coup-batterie (4), dont le bobinage (48) est alimenté à partir de la sortie de commande (22) par un transistor (50) ou similaire, un condensateur (51) étant en outre inséré en dérivation sur la commande (16 ; 16a) du transistor (13; 13a) de commande du deuxième bobinage (10, 71), de manière à retarder le début de l'action de celui-ci lors de la commande de coupure du circuit principal (7).

7. Coupe-batterie selon une des revendications précédentes, caractérisé par le fait que le premier bobinage (9) d'appel du dispositif électromagnétique principal est commandé par un transistor (12), lui-même commandé par un deuxième transistor (54), ce dernier étant commandé momentanément par le courant de charge d'un condensateur (55) chargé à partir de la sortie de commande (22), les composants de ce circuit, ainsi que ceux assurant la commande du transistor (13 ; 13a) du deuxième bobinage (10, 71), étant déterminés pour fonctionner même avec une tension de batterie de faible valeur.

8. Coupe-batterie selon une des revendications précédentes, caractérisé par le fait que le dispositif électromagnétique de commande du contact principal (7) comprend un équipage mobile principal (62 à 64) commandé par un unique bobinage d'appel (9), et un équipage mobile transversal (66, 69) commandé par un bobinage de rappel (71), avec rappel élastique (67) et agencé pour, en position relaxée, verrouiller l'équipage principal dans sa position de travail après coupure de l'excitation du bobinage d'appel, et pour libérer cet équipage principal pour qu'il retourne à sa position de repos lorsque le bobinage de rappel (71) est lui-même excité, la transistor (13a) de commande de ce bobinage de rappel (71) étant commandé pendant une durée déterminée, et après un retard déterminé après réception de l'ordre d'interruption par un détecteur de transitions approprié de la sortie de commande (22).

9. Coupe-batterie selon la revendication 8 et selon l'une des revendications 4 ou 5, caractérisé par le fait que le transistor de rappel (13a) est commandé directement à partir de la ligne d'interruption (42, 42a).

## Patentansprüche

1. Batterietrennschalter für ein Fahrzeug der Bauart, mit einem einpoligen oder mehrpoligen Hauptkontakt (7) im Hauptstromkreis der Batterie, der durch eine elektromagnetische Einrichtung mit zwei Spulen (9, 10; 9, 71) betätigt wird, mit einer elektronischen Fernsteuerung (5, 6) und einem Hilfskontakt (26), der eine bestimmte Zeit vor der Öffnung des Hauptstromkreises (7) den Massenschluß oder die Unterbrechung eines Erregerstromkreis (27) für die Wechselstromlichtmaschine (3), mit der das Fahrzeug ausgerüstet ist, gewährleistet, wobei die genannte elektronische Steuerung ein Ausgangsorgan (21, 43) aufweist, welches das Spannungsniveau eines Ausganges der Steuerung (22) aufbringt, der über eine geeignete Vorrichtung auf die Steuertransistoren (12, 13; 12, 13a) der beiden genannten Spulen wirkt, dadurch gekennzeichnet, daß er zwischen dem erwähnten Ausgang der Steuerung (22) und einem Eingang (39) des Ausgangsorgans (21, 43) der elektronischen Steuerung eine Zeitverzögerungsschaltung (28) aufweist, die das letztere Organ blockieren kann, wobei die Zeitverzögerungsschaltung negative Übergänge der Steuerschaltung (22) erfaßt, die dem Öffnungsbefehl des Hauptstromkreises (7) entsprechen, um während einer vorgegebenen Zeit am Eingang (39) des Ausgangsorganes (21, 43) die Blockierungspolarisation aufzubauen, so daß während der genannten Zeitverzögerung jeder Schließbefehl im Hauptstromkreis (7) der während der genannten vorbestimmten Zeit nach einem Befehl zur Öffnung des genannten Hauptkreises erfolgt, verhindert ist.

2. Batterietrennschalter nach Anspruch 1, dadurch gekennzeichnet, daß die Zeitverzögerungsschaltung (28) nach dem genannten Ausgang der Steuerung (22) einen Kondensator (29) aufweist, der über einen Widerstand (30) und eine Diode (31) geladen und über einen Transistor (33) und Widerstände (32, 34) entladen wird, wobei der genannte Transistor direkt über den genannten Ausgang der Steuerung gesteuert wird und seinerseits über einen zweiten Transistor (36) und ein optoelektronisches Koppelelement (37), eine Hemmleitung (38) steuert, die zum genannten Eingang (39) des Ausgangsorganes (21, 43) führt.

3. Batterietrennschalter nach einem der vorhergehenden Ansprüche, dadurch gekennzeichnet, daß die genannte Fernsteuerung vom Hauptkontakt (5) am Armaturenbrett ausgeht und eine Steuerleitung (6) aufweist, die über ein optoelektronisches Koppelelement (19) einen Steuereingang des Ausgangsorgans (21), das von einem Transistor od.dgl. gebildet ist, aktiviert.

4. Batterietrennschalter nach einem der Ansprüche 1 und 2, dadurch gekennzeichnet, daß dei Fernsteuerung einen Schaltknopf (40) mit Kurzzeitwirkung, der mit dem Hauptkontakt (5) in Reihe geschaltet ist, und einen Unterbrecherknopf (41) mit Kurzzeitwirkung aufweist, der an Masse angeschlossen ist, wobei die beiden Knöpfe über zwei getrennte Übertragungsleitungen (6, 42) eine bistabile elektronische Einrichtung (17 bis 20; 43 bis 45) steuern, die ihrerseits den genannten Steuerausgang (22) steuert.

5. Batterietrennschalter nach Anspruch 4, dadurch gekennzeichnet, daß die genannte bistabile elektronische Einrichtung einen Thyristor (43) od.dgl. aufweist, dessen Gate (44) ausgehend von der Steuerleitung (6) gesteuert wird, und dessen Anschluß (39) durch die Unterbrechungsleitung (42) gesteuert wird, und wobei der Drainanschluß (45) des Thyristors den Steuerausgang (22) polarisiert.

6. Batterietrennschalter nach einem der vorhergehenden Ansprüche, dadurch gekennzeichnet, daß der genannte Hilfskontakt (26) durch ein unabhängiges Relais (47) gesteuert wird, das vom Batterieschalter (4) getrennt, oder in diesen eingebaut ist, und dessen Spule (48) ausgehend vom Steuerausgang (22) über einen Transistor (50) od.dgl. gespeist wird, wobei weiters ein Kondensator (51) parallel zur Steuerung (16; 16a) des Transistors (13; 13a) der Steuerung des zweiten Spule (10; 71) zwischengeschaltet ist, so daß der Anfang der Wirkung desselben nach dem Unterbrechungsbefehl des Hauptstromkreises (7) verzögert wird.

7. Batterietrennschalter nach einem der vorhergehenden Ansprüche, dadurch gekennzeichnet, daß die erste Aktivierungsspule (9) des elektromagnetischen Hauptgerätes durch einen Transistor (12) gesteuert wird, der seinerseits durch einen zweiten Transistor (54) gesteuert wird, wobei letzterer vorübergehend vom Ladestrom eines Kondensators (55), der ausgehend vom Steuerausgang (22) geladen wird, gesteuert wird, wobei die Bauteile dieser Schaltung ebenso wie jene, welche die Steuerung des Transistors (13; 13a) der zweiten Spule (10, 71) gewährleisten, so ausgelegt sind, daß sie auch mit einer geringen Batteriespannung funktionieren.

8. Batterietrennschalter nach einem der vorhergehenden Ansprüche, dadurch gekennzeichnet, daß die elektromagnetische Steuereinrichtung des Hauptkontaktes (7) einen beweglichen Hauptteil (62 bis 64), der durch eine einzige Aktivierungsspule (9) gesteuert wird, und einen quer beweglichen Teil (66 bis 69) mit elastischer Rückstellung (67) aufweist, der durch eine Rückstellspule (71) gesteuert wird, und der so eingerichtet ist, daß er in der entspannten Stellung den Hauptteil in seiner Arbeitsstellung verriegelt, nachdem die Erregung der Aktivierungsspule unterbrochen ist, und daß er diesen Hauptteil freigibt, damit er in seine Ruhestellung zurückkehrt, wenn die Rückstellspule (71) selbst erregt ist, wobei der Transistor (13a) zur Steuerung dieser Rückstellspule (71) während einer vorbestimmten Zeitspanne und nach Empfang des Abschaltbefehls an einem geeigneten Übergangsdetektor des Steuerausganges (22) nach einer vorgegebenen Verzögerung gesteuert wird.

9. Batterietrennschalter nach Anspruch 8 und nach einem der Ansprüche 4 oder 5, dadurch gekennzeichnet, daß der Rückstelltransistor (13a) direkt von der Unterbrechungsleitung (42, 42a) gesteuert wird.

## Claims

1. Battery cut-out for vehicles, of the type comprising a single- or multi-pole main contact (7) on the main battery circuit actuated by an electromagnetic device having two windings (9, 10; 9, 71) with a remote electronic control (5, 6) and an auxiliary contact (26) providing the pre-contact to the earth or the cutting out of a circuit (27) for excitation of the alternator (3) fitted to the vehicle a certain time before the opening of the main circuit (7), the said electronic control comprising an output device (21, 43) establishing the voltage level of a control output (22) which acts, via a suitable device of control transistors (12, 13, 12, 13a) of the said two windings, characterised by the fact that it comprises a delay circuit (28) between the said control output (22) and an input (39) of the electronic control output device (21, 43) adapted to perform the locking of the latter device, the said delay detecting the negative transitions of the control output (22) corresponding to the order to open the main circuit (7) to set up, for a determined time, the blocking bias on the said output (39) of the output device (21, 43), so as to inhibit during the said delay any order to close the main circuit (7) occuring during the said determined time after an order to open the said main circuit.

2. Battery cut-out as claimed in claim 1, characterised by the fact that the said timinig circuit (28) comprises a capacitor (29) charged, by means of a resistance (30) and of a diode (31), from the said control output (22) and discharged by means of a transistor (33) and of resistances (32, 34), the said transistor being controlled directly by the said control output and controlling in its turn, through a second transistor (36) and an optocoupler (37), au inhibition line (38) ending at the said input (39) of the output device (21, 43).

3. Battery cut-out as claimed in one of the above claims, characterised by the fact that the said remote control leaves the main contact (5) at the dashboard and comprises a control line (6) actuating, via an optocoupler (19) a control input of the output device (21), which device is constituted by a translator or equivalent.

4. Battery cut-out as claimed in one of claims 1 and 2, characterised by the fact that the said remote control comprises a control button (40) of temporary action connected in series with the said main contact (5) and an interruption button (41) also of temporary action connected to the earth, these two buttons controlling via two separate transmission lines (6, 42) a bistable electronic device (17 to 20, 43 to 45), itself controlling the said control output (22).

5. Battery cut-out as claimed in claim 4, characterised by the fact that the said bistable electronic device comprises a thyristor (43) or the like the trigger (44) of which is controlled from the control line (6) and the source (39) of which is controlled by the interruption line (42), the drain (45) of this thyristor biasing the control output (22).

6. Battery cut-out as claimed in one of the above claims, characterised by the fact that the said auxiliary contact (26) is controlled by an independent relay (47), separate or incorporated in the battery cut-out (4), the winding (48) of which is energized from the control output (22) by a transistor (50) or the like, a capacitor (51) being additionally inserted in shunt with the control (16; 16a) of the transistor (13; 13a) for controlling the second winding (10; 71) so as to delay the start of the action of the latter at the time of the command to cut-out the main circuit (7).

7. Battery cut-out as claimed in one of the above claims, characterised by the fact that the first attraction winding (9) of the main electromagnetic device is controlled by a transistor (12), itself controlled by a second transistor (54), the latter being momentarily controlled by the charge current of a capacitor ( 55) charged from the control output (22), the components of this circuit, as well as those controlling the transistor (13; 13a) of the second winding (10, 71), being determined so as to operate even with a battery voltage of low value.

8. Battery cut-out as claimed in one of the above claims, characterised by the fact that the electromagnetic device for control of the main contact (7) comprises a main moving element (62 to 64) controlled by a single attraction winding (9), and a transverse moving element (66, 69) controlled by a return winding (71) with resilient return (67) and arranged so as in the relaxed position to lock the main element in its working position after cutting out the excitation of the attraction winding, and to free this main element so that it returns to its resting position when the return winding (71) is itself energised, the transistor (13a) for control of this return winding (71) being controlled for a determined time, and after a determined delay following receipt of the interruption order by an appropriate transition detector of the control output (22).

9. Battery cut-out as claimed in claim 8 and as claimed in one of claims 4 or 5, characterised by the fact that the return transistor (13a) is controlled directly from the interruption line (42, 42a).

# FIG. 1

FIG. 2

# FIG. 3

EP 0 280 751 B1

# FIG.4